# EUROPEAN PATENT SPECIFICATION

(11) **EP 1 841 849 B1**
(45) Date of publication and mention of the grant of the patent: **01.08.2012**
(21) Application number: 05815314.9
(22) Date of filing: 02.11.2005
(51) Int. Cl.: C11D 3/00, C11D 3/22, B65B 25/00

(54) **METHODS OF INHIBITING THE ADHERENCE OF LENSES TO SURFACES DURING THEIR MANUFACTURE**
VERFAHREN ZUR INHIBIERUNG DER HAFTUNG VON LINSEN AUF OBERFLÄCHEN BEI IHRER HERSTELLUNG
PROCEDES POUR INHIBER L'ADHERENCE DE LENTILLES A DES SURFACES PENDANT LEUR FABRICATION

(30) Priority: 05.11.2004 US 982297; 02.06.2005 US 143200
(43) Date of publication of application: 10.10.2007
(73) Proprietor: Johnson and Johnson Vision Care, Inc., Jacksonville, FL 32256 (US)
(72) Inventor: PEGRAM, Stephen C., Fruit Cove, FL 32259 (US); PASCUAL, Domingo P., Jacksonville, FL 32224 (US); SRINIVAS, Vandana R., Jacksonville, FL 32256 (US); ADAMS, Jonathan P., Jacksonville, FL 32256 (US); GOURD, Dominic P., Jacksonville, FL 32257 (US); GLOVER, James D., Jacksonville, FL 32250 (US)
(74) Representative: Tunstall, Christopher Stephen
(86) International application number: PCT/US2005/039447
(87) International publication number: WO 2006/052532

(56) References cited:
- WO-A-00/76881
- WO-A-2004/022114
- US-A- 5 675 962
- US-A1- 2002 071 789

## Description

This invention related to methods of manufacturing contact lenses.

### RELATED APPLICATIONS

This application is a continuation-in-part of a pending US patent application, U.S. Serial No. 10/982,297, filed on November 5, 2004.

### BACKGROUND

Contact lenses have been used commercially to improve vision since the 1950s. The first contact lenses were made of hard materials. Although these lenses are currently used, they are not suitable for all patients due to their poor initial comfort. Later developments in the field gave rise to soft contact lenses, based upon hydrogels, which are extremely popular today. These lenses have higher oxygen permeabilities and such are often more comfortable to wear than contact lenses made of hard materials. However, these new lenses are not without problems.

Contact lenses with high oxygen permeabilites are typically made of hydrophobic materials. The packaging for contact lenses are also made of hydrophobic materials. When one hydrophobic surface comes in contact with another, the surfaces stick to each other. The sticking of a contact lens to its packaging creates many problems. First the packaging is thicker and more rigid than the soft lenses contained therein. If a lens sticks to the packaging, when the user tries to remove the lens, the lens often tears and must be discarded. This can present problems when these lenses are manufactured because lenses must be transferred from their upstream processing stations to their final packaging without damaging the lens. One solution to this problem is to fill the lens package with either packaging solution or water to inhibit the sticking of the lens to the packaging. However, this solution only works if the upstream steps of the manufacturing process provide for the addition of solutions to the packages and often due to manufacturing constraints, solutions cannot be added until after the lens is in the packaging. Therefore there is a need for methods of inhibiting the adherence of contact lenses to their packaging that do not require adding the lenses to a packaged filled with solution This need is met by the following invention.

### DETAILED DESCRIPTION OF THE INVENTION

This invention includes a method of transferring a soft lens to hydrophobic packaging material comprising, consisting essentially of, or consisting of applying a lubricating solution to the hydrophobic packaging prior to transferring the soft lens to said packaging, wherein the lubrication solution comprises an effective amount of methyl cellulose.

As used herein, the "lubricating solutions" of the invention may be a water-based solution. Typical solutions include, without limitation, saline solutions, other buffered solutions, and deionized water. The preferred aqueous solution is deioinized water or saline solution containing salts including, without limitation, sodium chloride, sodium borate, sodium phosphate, sodium hydrogenphosphate, sodium dihydrogenphosphate, or the corresponding potassium salts of the same. These ingredients are generally combined to form buffered solutions that include an acid and its conjugate base, so that addition of acids and bases cause only a relatively small change in pH. The buffered solutions may additionally include 2-(N-morpholino)ethanesulfonic acid (MES), sodium hydroxide, 2,2-bis(hydroxymethyl)-2,2',2"-nitrilotriethanol, n-tris(hydroxymethyl)methyl-2-aminoethanesulfonic acid, citric acid, sodium citrate, sodium carbonate, sodium bicarbonate, acetic acid, sodium acetate, ethylenediamine tetraacetic acid and the like and combinations thereof. Preferably, the lubricating solution is a borate buffered or phosphate buffered saline solution or deionized water.

As used herein the term "applying" refers a means of contacting the lubricating solution with the hydrophobic packaging material. Examples of this means include spraying, stamping, swabbing, misting, or spin coating the hydrophobic packaging materials with the lubricating solution on any surface of the package that will be proximal to the lens. The preferred means of applying the lubricating solution is spraying it on the interior surface of the hydrophobic packaging. The spraying must be carefully controlled in order to prevent later manufacturing problems such as excessive solvent spillage or heat seal problems. Therefore it is preferred that the lubricating solution be applied only to the surface of the package that will be proximal to the lens. For example a coating of about 12 to about 18 mg of lubricating solution has been shown to inhibit the adherence of the soft lens to its hydrophobic packaging. The timing of the spraying is critical to getting the solution sprayed evenly across the package, and is preferably controlled by a computer. The air must be turned on prior to the pumps being activated in order for the pressure to stabilize. It is preferred that the air be turned on about 0.1 sec prior to the pump being activated, and it is preferred that the pump be activated for about 0.3 sec. The lubrication solution is delivered and the air must be turned off at the same time the pump finishes to prevent a dry spot from developing. Changes in the dimensions of the package air pressure, air tubing length, or pump speed will affect the timing.

The term "effective amount" refers to the amount of methyl cellulose (measured as weight percentage of the total weight of the lubricating solution) necessary to prevent sticking of lenses to their packaging. The effective amount is 0.1 % (1000 ppm) to 1.0%(10,000 ppm), more preferably 0.1 % to 0.8%. The most preferred effective amount is 0.3 % (3000 ppm) to 0.6 % (6000 ppm).

The methyl cellulose inhibits the adherence to the hydrophobic packaging material but does not degrade the hydrophobic packaging material, or change the physical parameters of the lens such as lens diameter, base curve or water content. Methyl cellulose is a polymer and the preferred molecular weight of that polymer is greater than 750,000 daltons, more preferably about 1,000,000 daltons. The preferred supplier for methyl cellulose is Fisher Scientific's brand M352 that is methoxylated 27.5% to 31.5% and a 2% solution thereof has a viscosity of 3,000 to 5,600 centipoise. Attempts to use other surfactants, including but not limited to Dextran 70, hydroxy ethylcellulose, hydroxypropyl methycellulose, hydroxymethyl cellulose, hydroxyethyl methylcellulose, and Glucamate DOE 120 were made. However none of those surfactants were suitable due to either their interaction with either the lens (for example distorting the dimensions of the lens or interacting with the lens material) or the hydrophobic packaging.

As used herein "soft lens" refers to an ophthalmic device that resides in or on the eye. These devices can provide optical correction or may be cosmetic. The term lens includes but is not limited to soft contact lenses, intraocular lenses, overlay lenses, ocular inserts, and optical inserts. The preferred lenses of the invention are soft contact lenses are made from silicone elastomers or hydrogels, which include but are not limited to silicone hydrogels, and fluorohydrogels. Soft contact lens formulations are disclosed in US Patent No. 5,710,302, WO 9421698, EP 406161, JP 2000016905, U.S. Pat. No. 5,998,498, US Pat. App. No. 09/532,943, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631. The particularly preferred lenses of the inventions made from etafilcon A, genfilcon A, galifilcon A, senofilcon A, lenefilcon A, lotrfilcon A, lotrifilcon B, balifilcon A, or polymacon. More particularly preferred lenses of the invention made from genfilcon A, galifilcon A, senofilcon A, lenefilcon A, lotrfilcon A, lotrifilcon B, or balifilcon A,. The most preferred lenses include but are not limited to galifilcon A, senofilcon A, and lenses disclosed in U.S. Pat. App. No. 60/318,536, entitled Biomedical Devices Containing Internal wetting Agents," filed on September 10, 2001 and its non-provisional counterpart of the same title, U.S. Serial No. 10/236,538, filed on September 6, 2002, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631.

"Hydrophobic packaging material," refers to substances that are used to prepare containers for manufacturing lenses prior to their use by an end user. These packaging materials are discarded by the user after the soft contact lens is placed in the eye of a user. Examples of hydrophobic packaging materials include but are not limited to polypropylene, polyethylene, nylons, olefin co-polymers, acrylics, rubbers, urethanes, polycarbonates, or fluorocarbons. The preferred materials are metallocenes polymers and co-polymers made of polypropylene, polyethylene, having a melt flow range of about 15 g/10 minutes to about 44 g/10 minutes as determined by ASTM D-1238. Containers made from hydrophobic packaging material may be in many forms. These containers may store a single lenses or many lenses. An example of a single lens storage unit is a blister package, such as the packages disclosed in the following publications, U.S. Pat. Nos. D435,966 S; 4,691,820; 5,467,868; 5,704,468; 5,823,327; 6,050,398. Examples of multiple lens storage units include the hydrophobic molds that are used to produce contact lenses as shown in U.S. Pat. No. 4,640,489. Other examples include trays, or other containers used in the process of producing soft lenses. The following example illustrates but does not limit the invention.

### Transferring Lenses

### Example 1

The monomer mixture that forms galifilcon A contact lenses was cured between a male and a female mold half. The cured lens was removed from the mold, hydrated and inspected. The lenses were removed from the inspection trays. An array of single contact lens packages made of polypropylene were positioned under a row of IVEK Spray Nozzles. Each of these nozzles has a spray nozzle air valve and an internal fluid nozzle. The packages were lined up, the air valve activated, and 10-40 psi of air pressure flowed around the internal fluid nozzles. This air pressure produced a stabilized low pressure area around the fluid nozzles and a short time thereafter precision positive displacement piston type fluid pumps inject a 0.43% (4300 ppm) solution of methyl cellulose in deionized water to the package arrays to coat the inner surface of the package with 12-18 mg of this solution. The coated packages move to the next processing station and are loaded with the hydrated lenses. None of the lenses stick to the packaging. If the methyl cellulose solution is not used, the lenses stick to the package upon transfer, and cannot be used. After loading the lenses, saline packaging solution is added (950 micro liters, to give a final methyl cellulose concentration of about 60 ppm) and the packages proceed to the remaining processing steps.

## Claims

1. A method of transferring a soft lens to hydrophobic packaging material comprising applying a lubricating solution to the hydrophobic packaging prior to transferring the soft lens to said packaging, wherein the lubrication solution comprises an effective amount of methyl cellulose.

2. The method of claim 1 wherein the effective amount of methyl cellulose is 0.1 % to 0.8%.

3. The method of claim 1 wherein the effective amount of methyl cellulose is 0.3% to 0.6%.

4. The method of claim 1 wherein the lubricating solution comprises deionized water.

5. The method of claim 3 wherein the lubricating solution comprises deionized water.

6. The method of claim 3 wherein the packaging solution comprises borate buffered or phosphate buffered saline solution.

7. The method of claim 1 wherein the methyl cellulose does not distort the physical properties of the soft lens.

8. The method of claim 7 wherein the methyl cellulose does not distort the diameter, base curve or water content of the soft lens.

9. The method of claim 7 wherein the methyl cellulose does not distort the diameter or base curve of the soft lens.

10. The method of claim 7 wherein the methyl cellulose does not distort the water content of the soft lens.

11. The method of claim 7 wherein the methyl cellulose does not increase or decrease the water content of the lens more than 1 %.

12. The method of claim 7 wherein the methyl cellulose does not increase or decrease the water content of the lens more than 0.8%.

13. The method of claim 1, 7 or 11 wherein the soft lenses comprise genfilcon A, galifilcon A, senofilcon A, lenefilcon A, lotrfilcon A, lotrifilcon B, or balifilcon A.

14. The method of claim 1 or 7 wherein the soft lenses comprise galifilcon A or senofilcon A.

## Patentansprüche

1. Verfahren zum Transferieren einer weichen Linse zu hydrophobem Verpackungsmaterial, umfassend das Auftragen einer Schmierlösung auf die hydrophobe Verpackung vor dem Transferieren der weichen Linse zu der Verpackung, wobei die Schmierlösung eine effektive Menge an Methylzellulose umfasst.

2. Verfahren nach Anspruch 1, wobei die effektive Menge an Methylzellulose 0,1% bis 0,8% beträgt.

3. Verfahren nach Anspruch 1, wobei die effektive Menge an Methylzellulose 0,3% bis 0,6% beträgt.

4. Verfahren nach Anspruch 1, wobei die Schmierlösung entionisiertes Wasser umfasst.

5. Verfahren nach Anspruch 3, wobei die Schmierlösung entionisiertes Wasser umfasst.

6. Verfahren nach Anspruch 3, wobei die Verpackungslösung eine boratgepufferte oder phosphatgepufferte Salzlösung umfasst.

7. Verfahren nach Anspruch 1, wobei die Methylzellulose die physikalischen Eigenschaften der weichen Linse nicht verzerrt.

8. Verfahren nach Anspruch 7, wobei die Methylzellulose den Durchmesser, die Basiskurve oder den Wassergehalt der weichen Linse nicht verzerrt.

9. Verfahren nach Anspruch 7, wobei die Methylzellulose den Durchmesser oder die Basiskurve der weichen Linse nicht verzerrt.

10. Verfahren nach Anspruch 7, wobei die Methylzellulose den Wassergehalt der weichen Linse nicht verzerrt.

11. Verfahren nach Anspruch 7, wobei die Methylzellulose den Wassergehalt der Linse um nicht mehr als 1% erhöht oder senkt.

12. Verfahren nach Anspruch 7, wobei die Methylzellulose den Wassergehalt der Linse um nicht mehr als 0,8% erhöht oder senkt.

13. Verfahren nach Anspruch 1, 7 oder 11, wobei die weichen Linsen Genfilcon A, Galifilcon A, Senofilcon A, Lenefilcon A, Lotrfilcon A, Lotrifilcon B oder Balifilcon A umfassen.

14. Verfahren nach Anspruch 1 oder 7, wobei die weichen Linsen Galifilcon A oder Senofilcon A umfassen.

## Revendications

1. Procédé de transfert d'une lentille souple vers un matériau de conditionnement hydrophobe comprenant l'application d'une solution lubrifiante sur le conditionnement hydrophobe avant le transfert de la lentille souple vers ledit conditionnement, dans lequel la solution de lubrification comprend une quantité efficace de méthylcellulose.

2. Procédé selon la revendication 1 dans lequel la quantité efficace de méthylcellulose est de 0,1 % à 0,8 %.

3. Procédé selon la revendication 1 dans lequel la quantité efficace de méthylcellulose est de 0,3 % à 0,6 %.

4. Procédé selon la revendication 1 dans lequel la solution lubrifiante comprend de l'eau déionisée.

5. Procédé selon la revendication 3 dans lequel la solution lubrifiante comprend de l'eau déionisée.

6. Procédé selon la revendication 3 dans lequel la solution de conditionnement comprend de la solution saline tamponnée par des borates ou tamponnée par des phosphates.

7. Procédé selon la revendication 1 dans lequel la méthylcellulose ne modifie pas les propriétés physiques de la lentille souple.

8. Procédé selon la revendication 7 dans lequel la méthylcellulose ne modifie pas le diamètre, la courbure de base ou la teneur en eau de la lentille souple.

9. Procédé selon la revendication 7 dans lequel la méthylcellulose ne modifie pas le diamètre ou la courbure de base de la lentille souple.

10. Procédé selon la revendication 7 dans lequel la méthylcellulose ne modifie pas la teneur en eau de la lentille souple.

11. Procédé selon la revendication 7 dans lequel la méthylcellulose n'augmente pas ou ne diminue pas la teneur en eau de la lentille de plus de 1 %.

12. Procédé selon la revendication 7 dans lequel la méthylcellulose n'augmente pas ou ne diminue pas la teneur en eau de la lentille de plus de 0,8 %.

13. Procédé selon la revendication 1, 7 ou 11 dans lequel les lentilles souples comprennent du genfilcon A, du galifilcon A, du senofilcon A, du lenefilcon A, du lotrifilcon A, du lotrifilcon B ou du balifilcon A.

14. Procédé selon la revendication 1 ou 7 dans lequel les lentilles souples comprennent du galifilcon A ou du senofilcon A.
